# EUROPÄISCHE PATENTANMELDUNG

(11) **EP 1 189 336 A1**
(43) Veröffentlichungstag der Anmeldung: **20.03.2002**
(21) Anmeldenummer: 00810831.8
(22) Anmeldetag: 14.09.2000
(51) Int. Cl.: H02P 9/10

(54) **Generatorsystem mit Gasturbine**

(71) Anmelder: ABB RESEARCH LTD., 8050 Zürich (CH)
(72) Erfinder: Alvarez Ortega, Isabel, Dipl.-Ing., 5405 Baden-Dättwil (CH); Puri, Narinda N., P.O. Box 909, Piscataway, NJ 08855-0909 (US); Suter, Marco, 5406 Rütihof (CH)
(74) Vertreter: ABB Patent Attorneys

(57) **Zusammenfassung**

In einem Generatorsystem mit einer Gasturbine (1) und einem von dieser angetriebenen Generator (2) wird ein Stromversorgungsnetz (5) von einem Energiespeicher (6) gespeist, wenn die Leistung der Gasturbine (1) im Falle einer Laständerung nicht ausreicht. Zur Überwindung der Trägheit der Gasturbine (1) wird zudem Energie vom Energiespeicher (6) an den Generator (2) geliefert, welcher als Motor die Gasturbine (1) beschleunigt, bis sie mindestens eine netzseitig geforderte Leistung aufweist.

## Beschreibung

### Technisches Gebiet

Die Erfindung bezieht sich auf ein Verfahren zur Regelung eines Generatorsystems und auf ein Generatorsystem gemäss Oberbegriff des Patentanspruches 1 beziehungsweise des Patentanspruches 6.

### Stand der Technik

Für die Stromerzeugung sind Generatorsysteme bekannt, welche sogenannte Turbogeneratoren einsetzen. Ein Turbogenerator weist eine kleine Gasturbine, beispielsweise eine Mikroturbine, und einen elektrischen Generator/Motor auf. Gasturbine und Rotor des Generators sind dabei über einen einfachen Schaft miteinander verbunden, so dass sich eine Änderung der Auslastung der Gasturbine unmittelbar auf die Generatorleistung und somit auf die Stromerzeugung auswirkt. Ein derartiger Turbogenerator ist in EP-A-0'901'218 beschrieben. Diese Turbogeneratoren eignen sich insbesondere zur Speisung eines Inselstromversorgungsnetzes.

Gasturbinen sind relativ träge, so können sie lediglich eine Leistungsänderung von 5 kW pro Sekunde erbringen. Dies reicht jedoch zur Betreibung eines InselStromversorgungsnetzes nicht aus, um Laständerungen aufzufangen.

Deshalb wird in EP-A-0'901'218 ein Energiespeicher verwendet, welcher im Normalbetrieb von der Gasturbine gespeist wird und im Falle einer Lasterhöhung die Differenz zur Gasturbinenleistung an das Netz abgibt. Im Inselnetzbetrieb wird zudem die Gasturbine über den Energiespeicher gestartet.

Damit auch grosse Laständerungen aufgefangen werden können, muss der Energiespeicher relativ gross ausgebildet sein. Dies trägt wesentlich zu den Kosten der Anlage sowie ihrer Grösse bei. Ein weiterer Nachteil ist, dass der Wirkungsgrad dieser Kleinkraftwerke während Laständerungen relativ schlecht ist, da die Turbine einen massiv erhöhten Bedarf an Brennstoff aufweist.

### Darstellung der Erfindung

Es ist deshalb Aufgabe der Erfindung, ein Verfahren zur Regelung eines Generatorsystems und ein Generatorsystem zu schaffen,. welche die obengenannten Nachteile beheben.

Diese Aufgabe löst ein Verfahren mit den Merkmalen des Patentanspruches 1 sowie Generatorsystem mit den Merkmalen des Patentanspruches 6 auf.

Erfindungsgemäss wird in einem gasturbinenbetriebenen Generatorsystem bei einer Laständerung ein Energiespeicher nicht nur dazu verwendet, um eine Energiedifferenz ans Netz zu liefern sondern auch, um dem Generator Energie zuzuführen. Der Generator wird somit bei Laständerungen als Motor eingesetzt, um die Gasturbine zu beschleunigen, damit diese baldmöglichst die benötigte Energie wieder selber liefern kann.

Die Reaktionszeit der Gasturbine wird dadurch massiv verkürzt. Dabei muss der Energiespeicher insgesamt weniger Energie an das gesamte System, das heisst an das Netz und den Generator, liefern als Energiespeicher, welche lediglich eine netzseitige Zufuhr der Energiedifferenz sicherstellen. Ein Energiespeicher mit geringer Speicherkapazität reicht somit aus.
Das erfindungsgemässe Generatorsystem weist zudem einen erhöhten Wirkungsgrad auf, da die Energie zur Beschleunigung der Turbine nicht oder nur zu einem kleinen Teil vom Brennstoff stammt und der wesentliche Anteil in Form von elektrischer Energie geliefert wird.

Weitere vorteilhafte Varianten des Verfahrens und vorteilhafte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: eine schematische Darstellung eines Generatorsystems mit einem Energiefluss im Normalbetrieb bei gleichbleibender Last;
- Figur 2: den Energiefluss im Generatorsystem gemäss Figur 1 nach einem Lastsprung;
- Figur 3: den Energiefluss nach erfolgter Beschleunigung der Turbine und
- Figur 4: den Energiefluss nach erfolgter Aufladung des Energiespeichers.

### Wege zur Ausführung der Erfindung

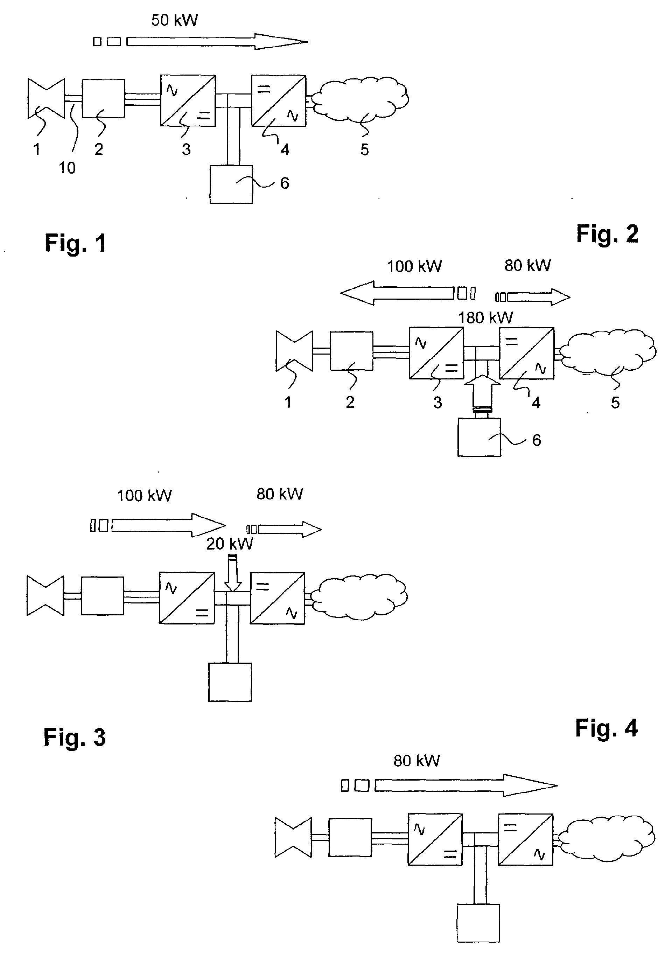

In Figur 1 ist schematisch ein Generatorsystem oder ein Kleinkraftwerk dargestellt. Vorzugsweise handelt es sich dabei um ein Turbogeneratorsytem, wie es eingangs beschrieben ist.
Das Generatorsystem weist eine Gasturbine 1 auf, vorzugsweise eine Mikroturbine. Mit dieser Gasturbine 1 ist über einen Schaft 10 ein Generator 2 verbunden, so dass sich eine Änderung der Drehzahl der Turbine 1 unmittelbar auf die Leistung des Generators 2 auswirkt.
Der Generator 2 ist über einen generatorseitigen Gleichrichter 3 und einen netzseitigen Wechselrichter 4 mit einem Stromversorgungsnetz 5, vorzugsweise einem Inselnetz, verbunden.

Im Gleichstromkreis zwischen Gleichrichter 3 und Wechselrichter 4 ist ein Energiespeicher 6 geschaltet. Als Energiespeicher 6 lassen sich alle bekannten Speicher verwenden, wie beispielsweise elektrische Speicher wie Batterien oder Schwungräder.

In Figur 1 ist ein Zustand im Normalbetrieb des Generatorsystems bei gleichbleibender Last dargestellt.
Die Turbine 1 dreht mit konstanter Drehzahl, so dass der Generator 2 eine konstante Leistung an das Stromversorgungsnetz 5 liefert. In diesem Beispiel wird ohne Vorwegnahme der Allgemeinheit angenommen, dass am Netz 5 eine Last angeschlossen ist, welche eine Leistung von 50 kW erfordert.
Der Start der Turbine erfolgte mit bekannten Mitteln, auf welche hier nicht eingegangen wird. Vorzugsweise wird dabei der generatorseitige Wechselrichter 4 als Startwechselrichter verwendet. Insbesondere lässt sich die Turbine im Falle eines Inselnetzes mittels des Energiespeichers 6 oder im Falle eines öffentlichen Stromversorgungsnetzes durch Bezug von elektrischer Energie vom Netz starten.

In Figur 2 ist die Situation dargestellt, welche im Falle eines Lastsprungs eintritt. Diese Situation kann bei einem Inselnetz auftreten oder bei einem normalen Netz unter Inselbedingungen, das heisst, wenn eine Hauptstromversorgung ausgefallen ist und das Generatorsystem eine Not- oder Zusatzstromversorgung bildet.
Als Beispiel wird angenommen, dass der netzseitige Leistungsbedarf auf 80 kW erhöht worden ist. Die Differenz von 30 kW kann nicht unmittelbar von der Turbine 1 geliefert werden. Erfindungsgemäss wird deshalb der gesamte netzseitige Energiebedarf vom Energiespeicher 6 gedeckt. Zudem liefert der Energiespeicher 6 Energie an den Generator 2, welcher als Motor 2 wirkt und die Turbine 1 beschleunigt, damit diese möglichst rasch den erhöhten Energiebedarf des Netzes 5 abdecken kann. Vorzugsweise wird während dieser Zeit auch die Brennstoffzufuhr für die Turbine 1 erhöht. Im Beispiel gemäss Figur 2 liefert der Energiespeicher 100 kW Leistung an den Generator 2, so dass vom Energiespeicher eine Leistung von insgesamt 180 kW bezogen wird. Eine elektrisch über den als Motor benützten Generator 2 erzeugte Beschleunigung weist einen Wirkungsgrad von annähernd 90% auf, eine über. eine erhöhte Brennstoffzufuhr erzielte Beschleunigung lediglich circa 20%. Die Verwendung des Energiespeichers 6 führt somit dazu, dass die Beschleunigung der Turbine 1 um bis zu 120 mal schneller erfolgt als mittels alleiniger Brennstoffzufuhr. Zwar wird eine erhöhte Leistung vom Energiespeicher 6 gefordert, da er sowohl das Netz 5 wie auch den Generator/Motor 2 versorgen muss. Da die Zeitspanne, in welcher die Gasturbine 1 den Energiebedarf nicht alleine decken kann, jedoch massiv verkürzt wird, wird der Energiebedarf jedoch massiv gesenkt. Der Energiespeicher 6 kann somit kleiner ausgebildet sein als die im Stand der Technik verwendeten Speicher. Beispielsweise benötigt im erfindungsgemässen Verfahren eine Laständerung von 20 kW auf 100 kW eine Energie von insgesamt 280 kJ, welche vom Energiespeicher bezogen wird. Der Energiebezug erfolgt dabei über einen Zeitraum von mindestens annähernd 0.8 sec, wobei im Schnitt eine Leistung von 200 kW verlangt wird. In einem Verfahren gemäss dem Stand der Technik, in welchem der Energiespeicher lediglich den Teil des Energiebedarfs liefert, welcher nicht von der Turbine verfügbar ist, würden vom Energiespeicher insgesamt 640 kJ bezogen werden, wobei der Energiespeicher während 16 sec im Einsatz wäre und im Schnitt 40 kWh liefern würde.

Hat die Turbine 3 die benötigte Drehzahl und somit die Ausgangsleistung erreicht, wird die Energiezufuhr vom Energiespeicher 6 an das Stromversorgungsnetz 5 unterbrochen und die Energie wiederum von der Turbine 1 bezogen. In Figur 3 ist diese Situation dargestellt, wobei die Turbine 1 über den notwendigen Wert hinaus beschleunigt worden ist, so dass sie eine grössere Leistung als netzseitig gefordert aufweist. Die überschüssige Energie wird an den Energiespeicher 6 geliefert, um diesen wieder zu füllen. In diesem Beispiel hier beträgt die momentane Leistung der Turbine 1 100 kW, so dass 20 kW an den Energiespeicher geliefert werden. In Figur 4 hat sich ein neuer Normalzustand bei gleichbleibender Last eingestellt, in welchem die netzseitig geforderte Energie ausschliesslich von der Turbine 1 geliefert wird, imm hier dargestellten Beispiel beträgt die Energie 80 kWh.
Die Regelung des Energieflusses beziehungsweise die Beschleunigung der Gasturbine erfolgt über Regelsysteme, wie sie im Stand der Technik bekannt sind. Die erfindungsgemässe Art der Regelung des Generatorsystems sowie das erfindungsgemässe Generatorsystem erlauben eine massive Verkürzung der Reaktionszeit der Gasturbine und somit eine Minimierung des Energiespeichers.

### Bezugszeichenliste

- 1: Gasturbine
- 10: Schaft
- 2: Generator
- 3: Gleichrichter
- 4: Netzseitiger Wechselrichter
- 5: Stromversorgungsnetz
- 6: Energiespeicher

## Patentansprüche

1. Verfahren zur Regelung eines Generatorsystems, welches einen von einer Gasturbine (1) angetriebenen Generator (2) und einen Energiespeicher (6) aufweist, wobei der Energiespeicher (6) bei einer für eine Energieversorgung eines Stromversorgungsnetzes (5) ausreichenden Leistung der Gasturbine (1) von dieser gespiesen wird und im Falle einer für die Energieversorgung des Netzes (5) ungenügenden Leistung der Gasturbine (1) eine fehlende Energie an das Netz (5) abgibt,
**dadurch gekennzeichnet, dass** im Falle der ungenügenden Leistung der Energiespeicher (6) Energie an den Generator (2) liefert, welches als Motor die Gasturbine (1) beschleunigt.

2. Verfahren nach Anspruch 1, **dadurch gekennzeichnet, dass** im Falle der ungenügenden Leistung eine Energieversorgung des Netzes (5) ausschliesslich durch den Energiespeicher (6) erfolgt.

3. Verfahren nach Anspruch 1, **dadurch gekennzeichnet, dass** die Gasturbine (1) so beschleunigt wird, dass sie eine höhere Leistung aufweist als zur Energieversorgung des Netzes (5) notwendig ist, und dass überschüssige Energie an den Energiespeicher (6) geliefert wird.

4. Verfahren nach Anspruch 1, **dadurch gekennzeichnet, dass** eine Brennstoffzufuhr erhöht wird, um die Gasturbine zusätzlich zu beschleunigen.

5. Verfahren nach Anspruch 1, **dadurch gekennzeichnet, dass** als Energiespeicher eine Batterie oder ein Schwungrad verwendet wird.

6. Generatorsystem mit einer Gasturbine (1), einem von dieser angetriebenen Generator (2), mit einem Gleichrichter (2), und einem Wechselrichter (4) zur Verbindung des Generators (2) an ein Stromversorgungsnetz (5) und mit einem Energiespeicher (6) zur Energieversorgung des Netzes (5) im Falle einer ungenügenden Leistung der Gasturbine (1),
**dadurch gekennzeichnet, dass**
im Falle der ungenügenden Leistung der Gasturbine (1) der Energiespeicher (6) eine Energieversorgung des Generators (2) und der Generator (2) einen Motor zur Beschleunigung der Gasturbine (2) bildet.

7. Generatorsystem nach Anspruch 6, **dadurch gekennzeichnet, dass** der Energiespeicher (6) zwischen Gleichrichter (3) und Wechselrichter (4) angeordnet ist.

8. Generatorsystem nach Anspruch 6, **dadurch gekennzeichnet, dass** die Gasturbine (1) über einen Schaft (10) unmittelbar mit einem Rotor des Generators (2) verbunden ist.

9. Generatorsystem nach Anspruch 6, **dadurch gekennzeichnet, dass** der Energiespeicher (6) mittels des Generators (2) füllbar ist.

10. Generatorsystem nach Anspruch 6, **dadurch gekennzeichnet, dass** der Energiespeicher (6) eine Batterie oder ein Schwungrad ist.
